(19) **Europäisches Patentamt / European Patent Office / Office européen des brevets**

(11) **EP 3 522 472 A1**

(12) # EUROPEAN PATENT APPLICATION
published in accordance with Art. 153(4) EPC

(43) Date of publication:
**07.08.2019 Bulletin 2019/32**

(51) Int Cl.:
***H04L 27/26*** (2006.01)

(21) Application number: **17867048.5**

(86) International application number:
**PCT/JP2017/039614**

(22) Date of filing: **01.11.2017**

(87) International publication number:
**WO 2018/084200 (11.05.2018 Gazette 2018/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.11.2016 US 201662417492 P**

(71) Applicant: **KYOCERA Corporation**
**Kyoto 612-8501 (JP)**

(72) Inventors:
- **URABAYASHI, Hiroyuki**
  **Kyoto-shi**
  **Kyoto 612-8501 (JP)**
- **FUJISHIRO, Masato**
  **Kyoto-shi**
  **Kyoto 612-8501 (JP)**
- **ADACHI, Hiroyuki**
  **Kyoto-shi**
  **Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **MOBILE COMMUNICATION METHOD, USER TERMINAL, AND DEVICE**

(57) A mobile communication method is a mobile communication method for performing communication between a base station and a user terminal by using a narrow band having a predetermined bandwidth. The mobile communication method comprises: a step of performing, by the user terminal, first communication related to control information by using a first narrow band in an n-th subframe; and a step of performing, by the user terminal, second communication related to user data by using a second narrow band different from the first narrow band in an (n+1)-th subframe. A symbol time region at an end of the n-th subframe and/or a symbol time region at a head of the (n+1)-th subframe are non-used regions provided for the user terminal to switch from the first narrow band to the second narrow band.

FIG. 8

EP 3 522 472 A1

**Description**

**TECHNICAL FIELD**

The present invention relates to a mobile communication method, and a user terminal and device used in a mobile communication system.

**BACKGROUND ART**

In 3GPP (3rd Generation Partnership Project), which is a project aiming to standardize a mobile communication system, a technology (hereinafter, MTC; Machine Type Communication) has been discussed in which a first user terminal communicates with a second user terminal by using a second bandwidth (for example, 6 PRBs (Physical Resource Blocks) = 1.08 MHz) narrower than a first bandwidth (for example, 9 MHz) supported by the first user terminal in one unit time (for example, one subframe = 1 msec) (for example, Non Patent Document 1).

**PRIOR ART DOCUMENT**

**NON-PATENT DOCUMENT**

Non Patent Document 1: 3GPP technical report "TS 36.388 V12.0.0" June, 2013

**SUMMARY OF THE INVENTION**

One aspect is abstracted as a mobile communication method for performing communication between a base station and a user terminal by using a narrow band having a predetermined bandwidth. The mobile communication method comprises: a step of performing, by the user terminal, first communication related to control information by using a first narrow band in an n-th subframe; and a step of performing, by the user terminal, second communication related to user data by using a second narrow band different from the first narrow band in an (n+1)-th subframe. A symbol time region at an end of the n-th subframe and/or a symbol time region at a head of the (n+1)-th subframe are non-used regions provided for the user terminal to switch from the first narrow band to the second narrow band.

**BRIEF DESCRIPTION OF THE DRAWINGS**

Fig. 1 is a configuration diagram of an LTE system according to an embodiment.
Fig. 2 is a block diagram of a UE 100 according to the embodiment.
Fig. 3 is a block diagram of an eNB 200 according to the embodiment.
Fig. 4 is a protocol stack diagram of a radio interface according to the embodiment.
Fig. 5 is a configuration diagram of a radio frame used in the LTE system according to the embodiment.
Fig. 6 is a diagram for describing an application scene according to the embodiment.
Fig. 7 is a diagram for describing an application scene according to the embodiment.
Fig. 8 is a diagram for describing an application scene according to the embodiment.
Fig. 9 is a flowchart illustrating a mobile communication method according to the embodiment.
Fig. 10 is a diagram for illustrating an application scene according to a first modification.
Fig. 11 is a flowchart illustrating a mobile communication method according to the first modification.
Fig. 12 is a diagram for describing an application scene according to a second modification.
Fig. 13 is a diagram for describing an application scene according to a third modification.
Fig. 14 is a diagram for describing an application scene according to a fourth modification.

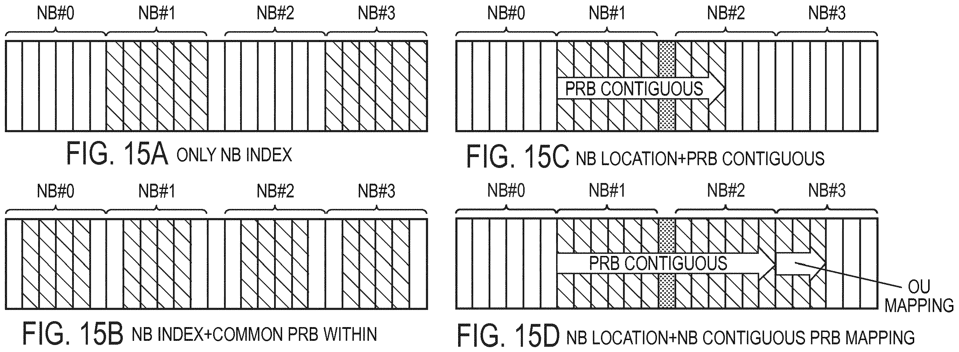

Fig. 15 is a diagram illustrating a method of an RB-based resource allocation in a system bandwidth of 5 MHz according to the additional remark.
Fig. 16 is a diagram for describing one bit for inverting a start position of NB according to the additional remark.

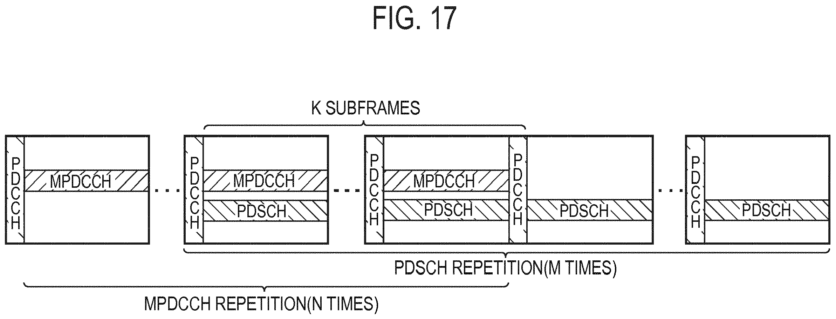

Fig. 17 is a diagram for describing an outline of the same subframe scheduling for FeMTC according to the additional remark.

**DESCRIPTION OF THE EMBODIMENT**

A mobile communication system according to an embodiment is described below by referring to the drawings.

In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

[Summary of Disclosure]

Although the MTC mentioned in the background art is considered to target a low data volume and low mobility second user terminal, a usage scene in which the MTC is required to have a low delay is conceivable.

A mobile communication method according to the summary of disclosure is a mobile communication method for performing communication between a base station and a user terminal by using a narrow band having a predetermined bandwidth. The mobile communication method comprises: a step of performing, by the user terminal, first communication related to control information by using a first narrow band in an n-th subframe; and a step of performing, by the user terminal, second communication related to user data by using a second narrow band different from the first narrow band in an (n+1)-th subframe. A symbol time region at an end of the n-th subframe and/or a symbol time region at a head of the (n+1)-th subframe are non-used regions provided for the user terminal to switch from the first narrow band to the second narrow band.

In the summary of disclosure, the narrowband allocation information transmitted by using a first narrow band in the n-th subframe is information for allocating, to the second terminal, a second narrow band different from the first narrow band in the (n+1)-th. According to such a configuration, low delay is achieved in a predetermined communication.

Further, an end region of a time region reserved for transmitting the narrowband allocation information in the n-th subframe, and a head region of the time region reserved for predetermined communication in the(n+1)-th subframe are non-decoding regions not decoded by the second user terminal. According to such a configuration, even if the subframe in which the narrowband allocation information is transmitted and the subframe in which the predetermined communication is performed are next to each other, the narrow band switching time of the second terminal is reserved by the non-decoding region.

[Embodiments]

An embodiment will be described by using, as an example, an LTE system based on 3GPP standards as a mobile communication system, below.

(System Configuration)

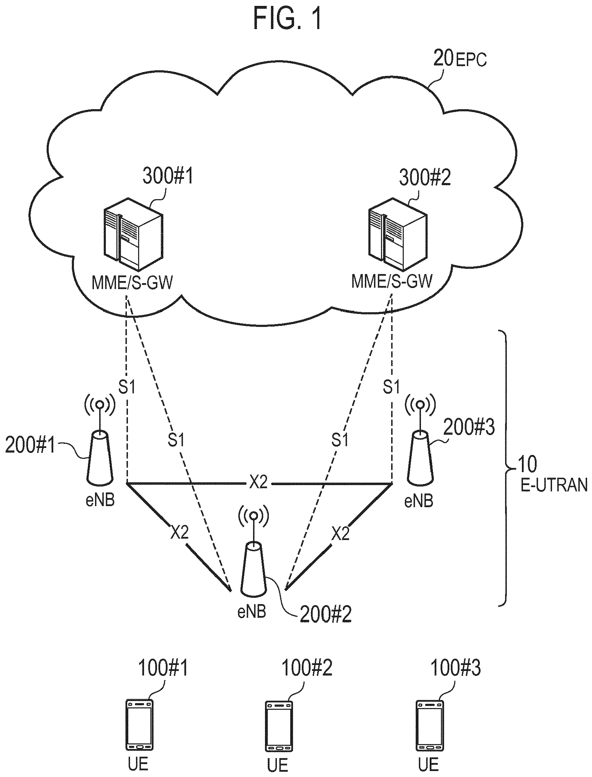

The system configuration of LTE system according to a first embodiment will be described. Fig. 1 is a configuration diagram of the LTE system according to the embodiment.

As illustrated in Fig. 1, the LTE system according to the embodiment includes UE (User Equipment) 100, E-UTRAN (Evolved-UMTS Terrestrial Radio Access Network) 10, and EPC (Evolved Packet Core) 20.

The UE 100 corresponds to a user terminal. The UE 100 is a mobile communication device. The UE 100 performs radio communication with a cell (a serving cell in a case where the UE 100 is in an RRC connected state) formed by the eNB 200. The configuration of the UE 100 will be described later.

The E-UTRAN 10 corresponds to a radio access network. The E-UTRAN 10 includes eNB 200 (an evolved Node-B). The eNB 200 corresponds to a radio base station. The eNBs 200 are connected mutually via an X2 interface. The configuration of the eNB 200 will be described later.

The eNB 200 formulates one or a plurality of cells. The eNB 200 performs radio communication with the UE 100 that establishes a connection with a cell of the eNB 200. The eNB 200 has a radio resources management (RRM) function, a routing function of user data, a measurement control function for mobility control and scheduling and the like. The "cell" is used as a term indicating a smallest unit of a radio communication area, and is also used as a term indicating a function of performing radio communication with the UE 100.

The EPC 20 corresponds to a core network. The EPC 20 includes MME (Mobility Management Entity)/S-GW (Serving-Gateway) 300. The MME performs different types of mobility control and the like for the UE 100. The S-GW performs transfer control of the user data. The MME/S-GW 300 is connected to the eNB 200 via an S1 interface. It is noted that the E-UTRAN 10 and the EPC 20 constitute a network of the LTE system.

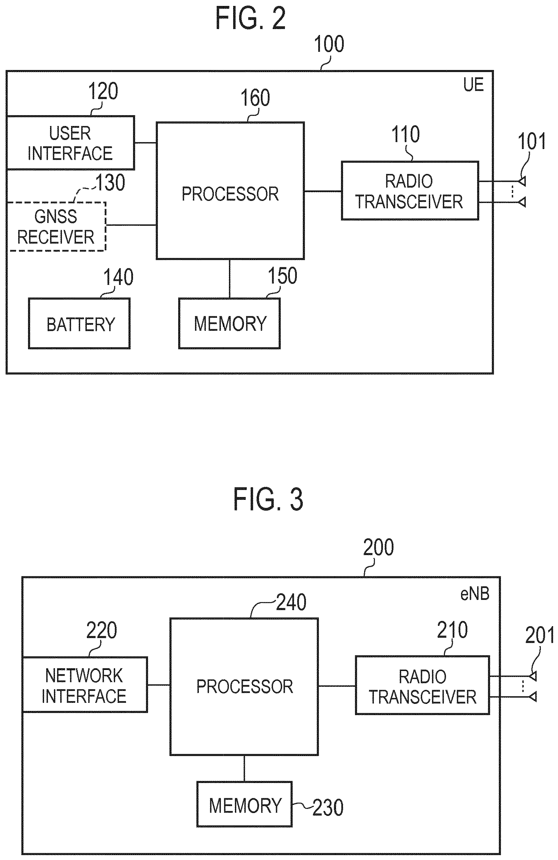

Fig. 2 is a block diagram of the UE 100. As illustrated in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 constitute a controller. The radio transceiver 110 and the processor 160 constitute a transmitter and a receiver. The UE 100 may not necessarily have the GNSS receiver 130. Furthermore, the memory 150 may be integrally formed with the processor 160, and this set (that is, a chip set) may be called a processor 160'.

The antenna 101 and the radio transceiver 110 are used to transmit and receive a radio signal. The radio transceiver 110 converts a baseband signal (a transmission signal) output from the processor 160 into a radio signal, and transmits the radio signal from the antenna 101. Furthermore, the radio transceiver 110 converts a radio signal received by the antenna 101 into a baseband signal (a reception signal). The radio transceiver 110 outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for processing by the processor 160. The processor 160 includes a baseband processor and a CPU (Central Processing Unit). The baseband processor performs modulation and demodulation, encoding and decoding and the like on the baseband signal. The CPU performs various types of processes by executing the program stored in the memory 150. The processor 160 may further include a codec that performs encoding and decoding on sound and video signals. The processor 160 executes various types of processes and various types of communication protocols described later.

Fig. 3 is a block diagram of the eNB 200. As illustrated in Fig. 3, the eNB 200 includes a plurality of antennas 201, a radio transceiver 210, a network interface 220, a memory 230, and a processor 240. The memory 230 and the processor 240 constitute a controller. The radio transceiver 210 and the processor 240 constitute a transmitter and a receiver. Furthermore, the memory 230 may be integrally formed with the processor 240, and this set (that is, a chipset) may be called a processor.

The antenna 201 and the radio transceiver 210 are used to transmit and receive a radio signal. The radio transceiver 210 converts a baseband signal (a transmission signal) output from the processor 240 into a radio signal, and transmits the radio signal from the antenna 201. Furthermore, the radio transceiver 210 converts a radio signal received by the antenna 201 into a baseband signal (a reception signal). The radio transceiver 210 outputs the baseband signal to the processor 240.

The network interface 220 is connected to the neighboring eNB 200 via the X2 interface, and is connected to the MME/S-GW 300 via the S1 interface. The network interface 220 is used in communication performed on the X2 interface and communication performed on the S1 interface.

The memory 230 stores a program to be executed by the processor 240 and information to be used for processing by the processor 240. The processor 240 includes a baseband processor and a CPU. The baseband processor performs modulation and demodulation, encoding and decoding and the like on the baseband signal. The CPU performs various types of processes by executing the program stored in the memory 230. The processor 240 executes various types of processes and various types of communication protocols described later.

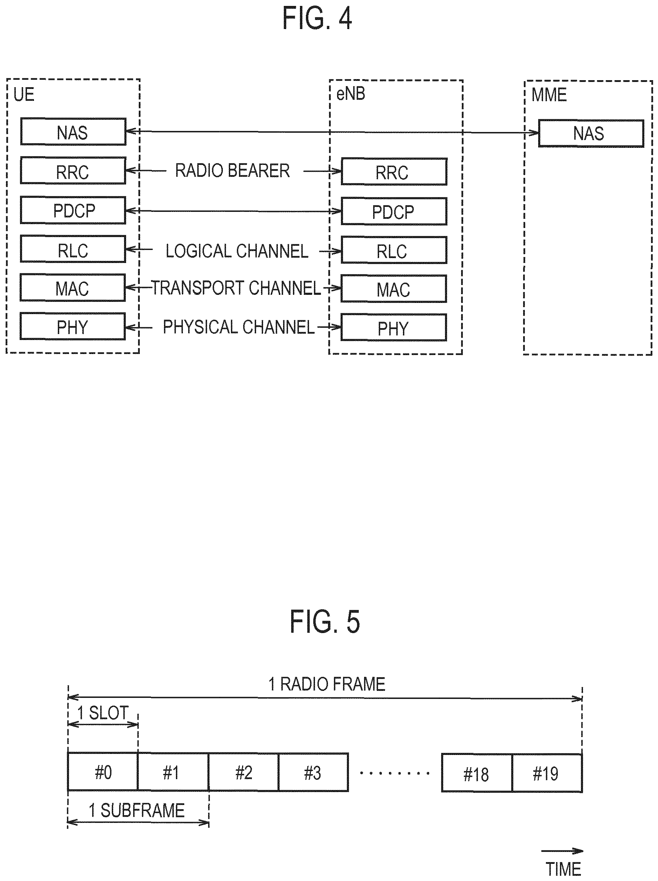

Fig. 4 is a protocol stack diagram of a radio interface in the LTE system. As illustrated in Fig. 4, the radio interface protocol is classified into a first layer to a third layer of an OSI reference model, such that the first layer is a physical (PHY) layer. The second layer includes a MAC (Media Access Control) layer, an RLC (Radio Link Control) layer, and a PDCP (Packet Data Convergence Protocol) layer. The third layer includes an RRC (Radio Resource Control) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted via a physical channel.

The MAC layer performs priority control of data, a retransmission process by a hybrid ARQ (HARQ), a random access procedure, and the like. Between the MAC layer of the UE 100 and the MAC layer of the eNB 200, user data and control signals are transmitted via a transport channel. The MAC layer of the eNB 200 includes a scheduler for determining a transport format (a transport block size and a modulation and coding scheme) of an uplink and a downlink, and resource blocks to be assigned to the UE 100.

The RLC layer transmits data to an RLC layer of a reception side by using the functions of the MAC layer and the physical layer. Between the RLC layer of the UE 100 and the RLC layer of the eNB 200, user data and control signals are transmitted via a logical channel.

The PDCP layer performs header compression and decompression, and encryption and decryption. It should also be noted that in the PDCP layer, a transmitting entity for transmitting data unit (PDCP PDU) or a receiving entity for receiving data unit (PDCP PDU) is formed.

The RRC layer is defined only in a control plane that handles control signals. Between the RRC layer of the UE 100 and the RRC layer of the eNB 200, a control signal (an RRC message) for various types of settings is transmitted.

The RRC layer controls a logical channel, a transport channel, and a physical channel according to the establishment, re-establishment, and release of a radio bearer. When there is a connection (an RRC connection) between the RRC of the UE 100 and the RRC of the eNB 200, the UE 100 is in an RRC connected state. When there is no connection (an RRC connection) between the RRC of the UE 100 and the RRC of the eNB 200, the UE 100 is in an RRC idle state.

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction (not shown), and a plurality of symbols in the time direction (e.g., 1 OFDM symbol). Each resource block includes a plurality of subcarriers in the frequency direction. One symbol and one subcarrier forms one resource element. Of the radio resources (time and frequency resources) assigned to the UE 100, a frequency resource can be identified by a resource block and a time resource can be identified by a subframe (or a slot).

(Application scene)

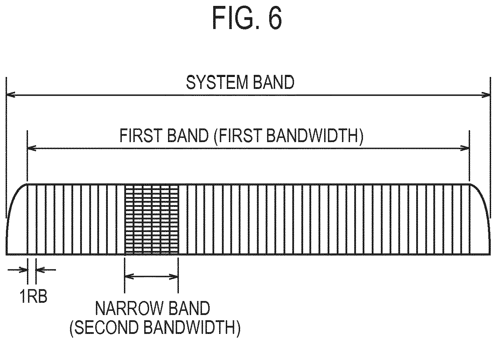

An application scene will be described. Fig. 6 to Fig. 8 are diagrams each describing an application scene according to the embodiment. Predetermined communication (MTC: Machine Type Communication) in the LTE system will be mainly described below.

As illustrated in Fig. 6, a bandwidth of a system band of the LTE system is 10 MHz. The system band includes a first band with a first bandwidth supported by a general first user terminal and a second band (hereinafter, narrow band) with a second bandwidth supported by a second user terminal (hereinafter, an MTC terminal) corresponding to the MTC. For example, the first bandwidth is 50 PRBs (Physical Resource Blocks) = 9 MHz, and the second bandwidth is, for example, 6 PRBs (Physical Resource Blocks) = 1.08 MHz. The narrow band is a part of the first band. Under such a premise, the above-described MTC is a technology for performing predetermined communication (hereinafter, MTC) between the MTC terminal and the eNB 200 using the narrow band.

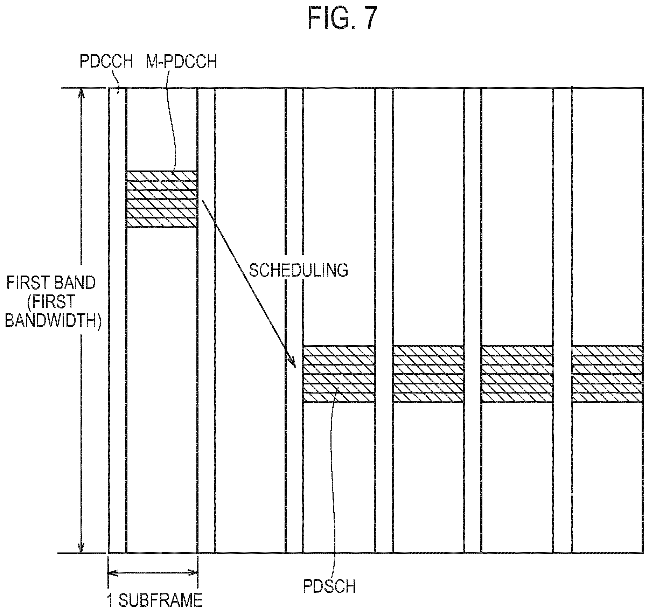

As illustrated in Fig. 7, in the MTC, the MTC terminal cannot receive Physical Downlink Control Channel (PDCCH), and a predetermined control channel (hereinafter, M-PDCCH; MTC Physical Downlink Control Channel) used for the MTC is adopted. The M-PDCCH is used for transmitting predetermined control information used for the MTC (hereinafter, DCI; Downlink Control Information).

In the embodiment, a repetition may be employed in the MTC from a viewpoint of improving the reachability of a signal from a transmitting node to a receiving node. For example, if the transmitting node is an eNB 200 and the receiving node is an MTC terminal, as illustrated in Fig. 7, PDSCH (Physical Downlink Shared Channel) transmission is repeated over a plurality of subframes. Narrowband allocation information is included in the DCI of the M-PDCCH, for example.

Under such a background, low delay would be achieved by transmitting the M-PDCCH and the PDSCH in subframes next to each other.

In the embodiment, the eNB 200 transmits narrowband allocation information described below as the narrowband allocation information used for the MTC (step A). The MTC terminal performs the MTC, based on the narrowband allocation information (step B).

Specifically, the narrowband allocation information transmitted by using a first narrow band in an n-th subframe is information for allocating a second narrow band different from the first narrow band to the MTC terminal in an (n+1)-th. The narrowband allocation information is included in the DCI of the M-PDCCH, for example.

Further, an end region of a time region reserved for transmitting the narrowband allocation information in the n-th subframe, and a head region of the time region reserved for predetermined communication in the (n+1)-th subframe are non-decoding regions not decoded by the second user terminal.

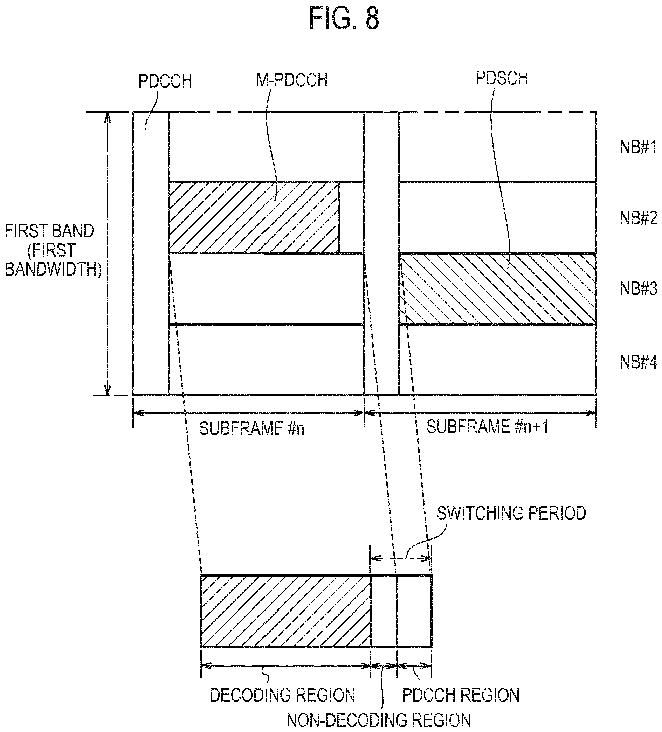

For example, as illustrated in Fig. 8, a case is assumed where the M-PDCCH is transmitted in a narrow band NB #2 of a subframe #n and the narrowband allocation information for allocating a narrow band NB #3 of a subframe #n+1 to the MTC terminal is included in DCI of the M-PDCCH.

In such a case, the time region reserved for transmitting the M-PDCCH in the subframe #n includes a decoding region and a non-decoding region. The non-decoding region is the end region of the time region reserved for transmitting the M-PDCCH. As described above, the non-decoding region is a region not decoded by the MTC terminal.

In the embodiment, the eNB 200 transmits the M-PDCCH by using the decoding region in the subframe #n. In other words, the eNB 200 does not use the non-decoding region to transmit the M-PDCCH in the subframe #n. Therefore, the MTC terminal can switch the narrow band (in this case, a reception narrow band) by using the non-decoding region of the subframe #n and the PDCCH region of the subframe #n+1. That is, the MTC terminal can appropriately receive the PDSCH of the subframe #n+1 by using the non-decoding region as a narrowband switching time.

In such a case, the eNB 200 may transmit region information for specifying the decoding region to the MTC terminal (step C). The region information may just need to be information for specifying a temporal boundary between the decoding region and the non-decoding region. The region information may be, for example, at least one of an OFDM symbol number corresponding to the non-decoding region, an OFDM symbol number corresponding to the decoding region, and information indicating a data length of the M-PDCCH (narrowband allocation information). Alternatively, the region information may include information (for example, a 1-bit flag) indicating whether or not the non-decoding region is set. Such information may be included in a case where the decoding region (or the non-decoding region) is a fixed data length or may be included in a case where the decoding region (or the non-decoding region) is a variable length. The fixed data length provided in the decoding region (or the non-decoding region) may be previously defined or may be included in broadcast information (SIB and the like) broadcast from the eNB 200. According to such a configuration, since the MTC terminal can grasp a time length of the decoding region, the M-PDCCH (narrowband allocation information) can be appropriately decoded.

Further, the eNB 200 may transmit the region information to a UE 100 (third user terminal) other than the MTC terminal to which the M-PDCCH is transmitted. A UE 100 other than the MTC terminal may be a conventional MTC terminal not supporting a scheme of receiving the M-PDCCH and the PDSCH in the subframes next to each other. Here, since the conventional MTC terminal does not receive the M-PDCCH and the PDSCH in the subframes next to each other, there is no need to consider the switching time and there is no need to set the non-decoding region to the conventional MTC terminal. Even in such a case, irrespective of whether or not the scheme of receiving the M-PDCCH and the PDSCH in the subframes next to each other is supported, if the region information is notified to the conventional MTC terminal, a common M-PDCCH can be used. As described above, in a case of using the common M-PDCCH, the data length of the non-decoding region may be defined in units of OFDM symbols or may be defined in units of resource elements.

(Mobile communication method)

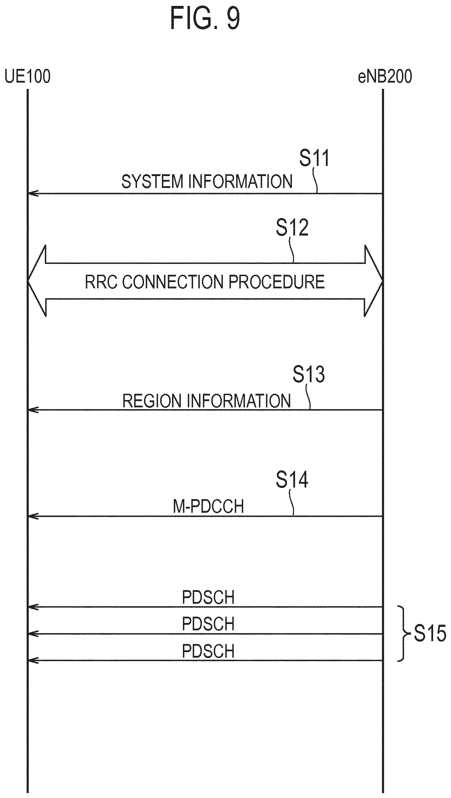

A mobile communication method according to the embodiment will be described. Fig. 9 is a flowchart for describing the mobile communication method according to the embodiment. In Fig. 9, a case will be mainly described where the UE 100 is an MTC terminal and MTC of downlink communication is performed.

As illustrated in Fig. 9, in step S11, the eNB 200 broadcasts system information. The system information is MIB (Master Information Block) and SIB. The SIB is SIB defined for the MTC.

In step S12, an RRC connection procedure is performed. In the RRC connection procedure, communication of an RRC message such as an RRC connection request and an RRC connection setup is performed.

In step S13, the eNB 200 transmits region information for specifying the decoding region to the MTC terminal.

In step S14, the eNB 200 transmits the M-PDCCH to the MTC terminal. The eNB 200 transmits the M-PDCCH by using the decoding region rather than using the non-decoding region. For example, DCI of the M-PDCCH transmitted by using the narrow band NB #2 of the subframe #n includes narrowband allocation information for allocating the narrow band NB #3 of the subframe #n+1 to the MTC terminal. The MTC terminal obtains the narrowband allocation information by decoding the M-PDCCH included in the decoding region.

In step S15, the eNB 200 performs the repetition of the PDSCH. The MTC terminal switches the narrow band (here, the reception narrow band) by using the non-decoding region of the subframe #n and the PDCCH region of the subframe #n+1.

(Operation and Effect)

In the embodiment, the narrowband allocation information transmitted by using a first narrow band in the n-th subframe is information for allocating, to the MTC terminal, a second narrow band different from the first narrow band in the (n+1)-th. According to such a configuration, low delay is achieved in a predetermined communication.

Further, an end region of the time region reserved for transmitting the narrowband allocation information in the n-th subframe, and a head region of the time region reserved for predetermined communication in the(n+1)-th subframe are non-decoding regions not decoded by the MTC terminal. According to such a configuration, even if the subframe in which the narrowband allocation information is transmitted and the subframe in which the predetermined communication is performed are next to each other, the narrow band switching time of the MTC terminal is reserved by the non-decoding region.

[First Modification]

A first modification will be described. A difference from the embodiment will be mainly described, below.

In the embodiment, the case where the eNB 200 transmits the M-PDCCH by using the decoding region without using the non-decoding region is described. On the other hand, in the first modification, the eNB 200 transmits the M-PDCCH using both the decoding region and the non-decoding region.

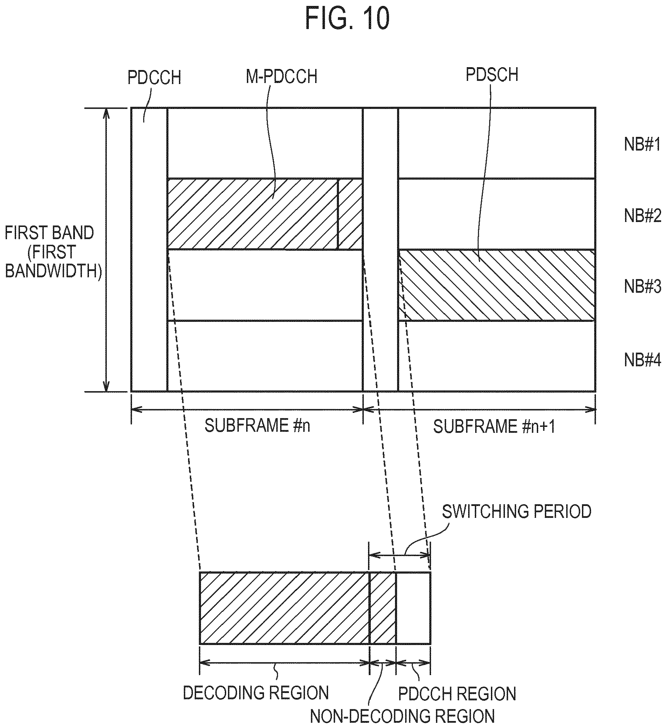

For example, as illustrated in Fig. 10, a case is assumed where the M-PDCCH is transmitted in the narrow band NB #2 of the subframe #n and the narrowband allocation information for allocating the narrow band NB #3 of the subframe #n+1 to the MTC terminal is included in DCI of the M-PDCCH.

In such a case, the time region reserved for transmitting the M-PDCCH in the subframe #n includes a decoding region and a non-decoding region. The non-decoding region is the end region of the time region reserved for transmitting the M-PDCCH. As described above, the non-decoding region is a region not decoded by the MTC terminal.

In the embodiment, the MTC terminal regards a data bit corresponding to the non-decoding region as a padding bit and decodes the M-PDCCH (narrowband allocation information). For example, the padding bit is zero. Here, since the redundant configuration is adopted in the M-PDCCH, even if the data bit corresponding to the non-decoding region is regarded as a padding bit, the M-PDCCH can be decoded with a certain degree of accuracy.

In such a case, the eNB 200 need not transmit the region information for specifying the decoding region to the MTC terminal.

(Mobile communication method)

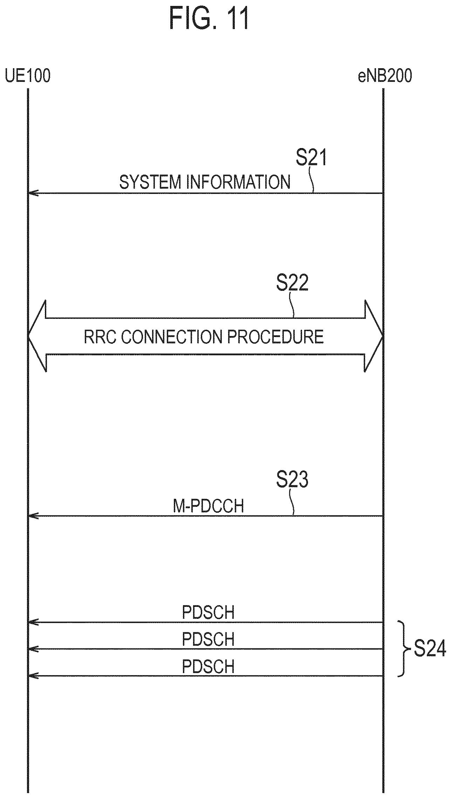

A mobile communication method according to the embodiment will be described. Fig. 11 is a flowchart for describing the mobile communication method according to the embodiment. In Fig. 11, a case will be mainly described where the UE 100 is an MTC terminal and MTC of downlink communication is performed.

As illustrated in Fig. 11, in step S21, the eNB 200 broadcasts system information. The system information is MIB (Master Information Block) and SIB. The SIB is SIB defined for the MTC.

In step S22, an RRC connection procedure is performed. In the RRC connection procedure, communication of an RRC message such as an RRC connection request and an RRC connection setup is performed.

In step S23, the eNB 200 transmits the M-PDCCH to the MTC terminal. The eNB 200 transmits the M-PDCCH by using both the decoding region and the non-decoding region. For example, DCI of the M-PDCCH transmitted by using the narrow band NB #2 of the subframe #n includes narrowband allocation information for allocating the narrow band NB #3 of the subframe #n+1 to the MTC terminal. The MTC terminal regards the data bit corresponding to the non-decoding region as a padding bit and decodes the M-PDCCH to obtain the narrowband allocation information.

In step S24, the eNB 200 performs the repetition of the PDSCH. The MTC terminal switches the narrow band (here, the reception narrow band) by using the non-decoding region of the subframe #n and the PDCCH region of the subframe #n+1.

[Second Modification]

A second modification will be described. A difference from the embodiment will be mainly described, below.

In the embodiment, the non-decoding region is the end region in the time region reserved for transmitting the M-PDCCH in the subframe #n. On the other hand, in the second modification, the non-decoding region is the head region of the time region reserved for the MTC (PDSCH) in the subframe #n+1.

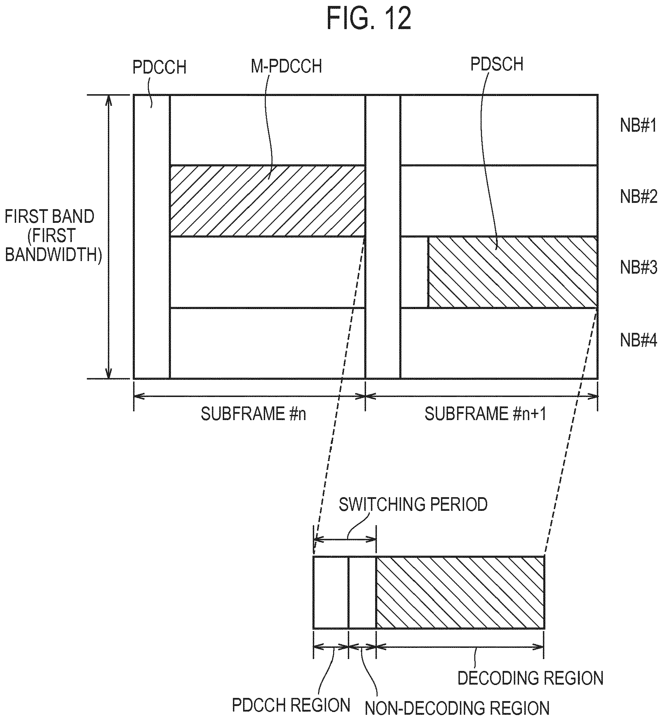

For example, as illustrated in Fig. 12, a case is assumed where the M-PDCCH is transmitted in the narrow band NB #2 of the subframe #n and the narrowband allocation information for allocating the narrow band NB #3 of the subframe #n+1 to the MTC terminal is included in DCI of the M-PDCCH.

In such a case, a time region reserved for transmitting the PDSCH in the subframe #n+1 includes the decoding region and the non-decoding region. The non-decoding region is the head region of the time region reserved for transmitting the PDSCH. As described above, the non-decoding region is a region not decoded by the MTC terminal.

In the embodiment, the eNB 200 transmits the PDSCH by using the decoding region in the subframe #n+1. In other words, the eNB 200 does not use the non-decoding region for transmitting the PDSCH in the subframe #n+1. Therefore, the MTC terminal can switch the narrow band (in this case, a reception narrow band) by using the PDCCH region of the subframe #n+1 and the non-decoding region of the subframe #n+1. That is, the MTC terminal can appropriately receive the PDSCH of the subframe #n+1 by using the non-decoding region as a narrowband switching time.

In such a case, the eNB 200 may transmit the region information for specifying the decoding region to the MTC terminal, as in the embodiment. The region information may just need to be information for specifying a temporal boundary between the decoding region and the non-decoding region. The region information may be, for example, at least one of an OFDM symbol number corresponding to the non-decoding region, an OFDM symbol number corresponding to the decoding region, and information indicating a data length of the PDSCH (data related to the MTC). Alternatively, the region information may include information (for example, a 1-bit flag) indicating whether or not the non-decoding region is set. Such information may be included in a case where the decoding region (or the non-decoding region) is a fixed data length or may be included in a case where the decoding region (or the non-decoding region) is a variable length. The fixed data length provided in the decoding region (or the non-decoding region) may be previously defined or may be included in broadcast information (SIB and the like) broadcast from the eNB 200. According to such a configuration, since the MTC terminal can grasp the time length of the decoding region, the MTC terminal can appropriately decode PDSCH (data on MTC).

[Third Modification]

A third modification will be described. Differences from the second modification will be mainly described, below.

In the second modification, the case where the eNB 200 transmits the PDSCH by using the decoding region without using the non-decoding region is described. On the other hand, in the first modification, the eNB 200 transmits the PDSCH by using both the decoding region and the non-decoding region.

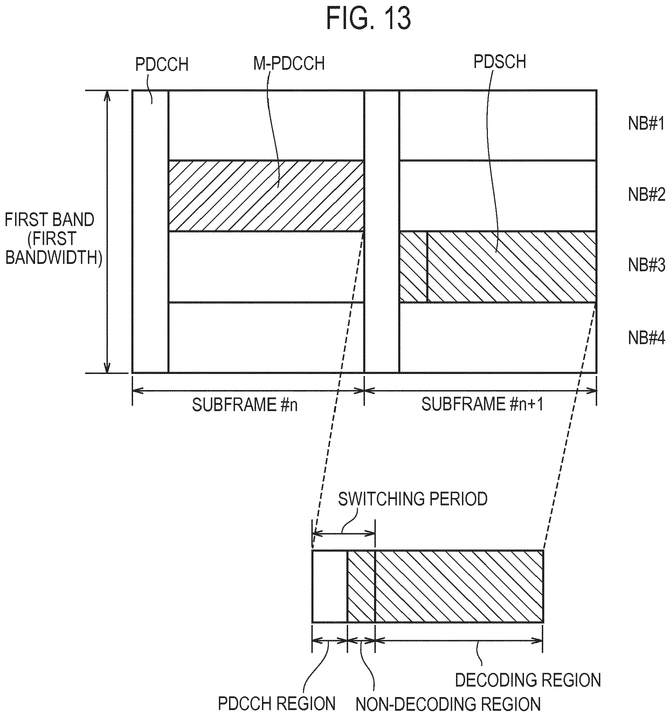

For example, as illustrated in Fig. 13, a case is assumed where the M-PDCCH is transmitted in the narrow band NB #2 of the subframe #n and the narrowband allocation information for allocating the narrow band NB #3 of the subframe #n+1 to the MTC terminal is included in DCI of the M-PDCCH.

In such a case, a time region reserved for transmitting the PDSCH in the subframe #n+1 includes the decoding region and the non-decoding region. The non-decoding region is the head region of the time region reserved for transmitting the PDSCH. As described above, the non-decoding region is a region not decoded by the MTC terminal.

In the embodiment, the MTC terminal regards the data bit corresponding to the non-decoding region as a padding bit and decodes the PDSCH (data related with the MTC). For example, the padding bit is zero. Here, since the redundant configuration is adopted in the PDSCH, even if the data bit corresponding to the non-decoding region is regarded as the padding bit, the PDSCH can be decoded with a certain degree of accuracy.

In such a case, the eNB 200 need not transmit the region information for specifying the decoding region to the MTC terminal.

[Fourth Modification]

A fourth modification will be described. A difference from the embodiment will be mainly described, below.

In the embodiment, the time region reserved for transmitting the M-PDCCH in the subframe #n includes the decoding region and the non-decoding region. On the other hand, in the fourth modification, a transmission start position of the PDCCH in the subframe #n+1 is temporally shifted.

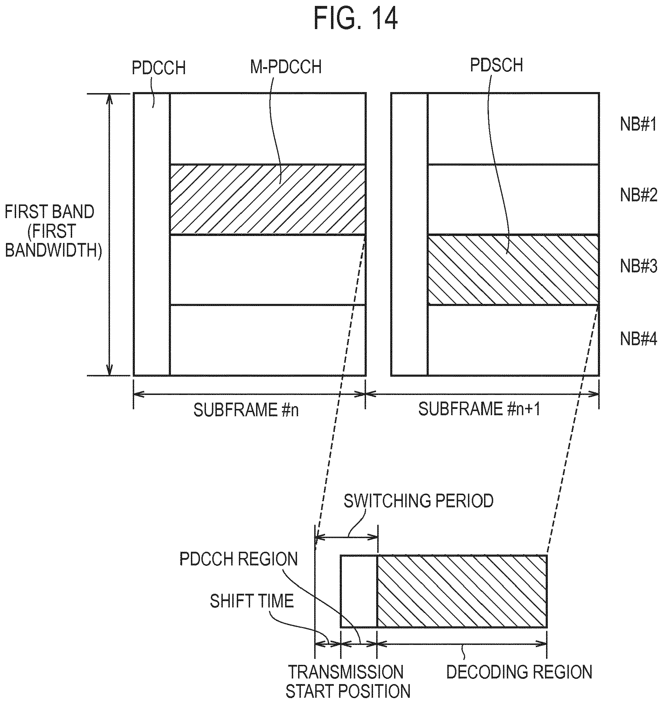

For example, as illustrated in Fig. 14, a case is assumed where the M-PDCCH is transmitted in a narrow band NB #2 of the subframe #n and the narrowband allocation information for allocating a narrow band NB #3 of the subframe #n+1 to the MTC terminal is included in DCI of the M-PDCCH.

In such a case, the transmission start position of the PDCCH in the subframe #n+1 is shifted to a time after the transmission start position of the subframe #n+1. The shift time of the transmission start position of the PDCCH is determined, for example, in a range of 0 OFDM to 3 OFDM symbols. According to such a configuration, the MTC terminal can switch the narrow band (in this case, the reception narrow band) by using the shift time of the transmission start position of the PDCCH in the subframe #n+1 and the PDCCH region of the subframe #n+1.

Here, the case is described where the transmission start position of the PDCCH in the subframe #n+1 is shifted to a time after the transmission start position of the subframe #n+1. However, the fourth modification is not limited thereto. Specifically, the transmission start position of the PDCCH in the subframe #n may be shifted to a time before the transmission start position of the subframe #n. The eNB 200 may previously transmit, to the MTC terminal, information (hereinafter, timing information) specifying a timing at which the M-PDCCH is transmitted to realize such a configuration. The timing information may include information indicating whether or not the transmission start position of the M-PDCCH is shifted, and may include a time interval (shift time) between the transmission start position of the M-PDCCH and the transmission start position of the subframe, and may include a transmission period of the M-PDCCH. As a result, the MTC terminal can grasp the transmission start position of the M-PDCCH, and can appropriately decode the M-PDCCH.

The timing information may be broadcast in advance to the MTC terminal from the eNB 200 in a case of shifting the transmission start position of the PDCCH in the subframe #n+1 to a time after the transmission start position of the subframe #n+1.

[Other Embodiments]

The present invention was described in terms of the embodiment set forth above, however the invention should not be understood to be limited by the statements and the drawings constituting a part of this disclosure. From this disclosure, various alternative embodiments, examples, and operational technologies will become apparent to those skilled in the art.

In the embodiment, the time length of the non-decoding region may be determined according to the time length of the PDCCH (physical downlink control channel) in the (n+1)-th subframe. As described above, since the MTC terminal does not receive the PDCCH, the PDCCH region can be used as the switching time. Therefore, by setting the time length of the non-decoding region by the time length of the PDCCH, the non-decoding region can be minimized.

In the embodiment, the region information may be determined according to a processing capability of the MTC terminal (for example, a processing capability of a CPU provided in the MTC terminal). For example, the MTC terminal notifies the eNB of information on the processing capability which is included in the capability information of the MTC terminal, and the eNB may determine the region information (for example, the time length of the non-decoding region) according to the processing capability information. The information on the processing capability for the MTC terminal to notify the eNB may be a symbol number, a time required for switching, or an index value previously set according to the processing capability.

In the embodiment, the case where the MTC is downlink communication has mainly been described; however, the embodiment is not limited thereto. The embodiments are also applicable to a case where the MTC is uplink communication.

Although not particularly mentioned in the embodiments, a program for causing a computer to execute each process performed by the UE 100 and the eNB 200 may be provided. Further, the program may be recorded on a computer-readable medium. If the computer-readable medium is used, it is possible to install the program in a computer. Here, the computer-readable medium recording therein the program may be a non-transitory recording medium. The non-transitory recording medium is not particularly limited; the non-transitory recording medium may include a recording medium such as a CD-ROM or a DVD-ROM, for example.

Alternatively, a chip may be provided which includes: a memory in which a program for performing each process performed by the UE 100 and the eNB 200 is stored; and a processor for executing the program stored in the memory.

In the embodiments, the LTE system is described as an example of a mobile communication system. However, the embodiment is not limited thereto. The mobile communication system may be a system other than the LTE system.

[Supplementary Note]

(1. Introduction)

In RANP#72, Further Enhanced MTC for LTE WI was approved. This is included a task to support the higher data rate than 1Mbps for voice capable wearable devices and health monitoring devices. In this supplementary note, it discusses the DCI design and scheduling method for higher data rates.

In the RAN1 meeting the following was agreed.

- The wider bandwidth operation is enabled by eNB.

- Wider bandwidth PDSCH/PUSCH is cross subframe scheduled by MPDCCH.

- MPDCCH follows Rel-13 design, which implies that it can be decoded by a UE operating in narrowband operation (6RB).

- If a new grant is introduced for wideband PDSCH/PUSCH, the number of blind decodings of MPDCCH does not increase with respect to Rel-13 eMTC.

- For Rel-14 BL UEs in CE mode A (FFS for CE mode B), the single larger maximum UE channel BW for PDSCH and PUSCH in RRC connected mode is 5 MHz.

- For Rel-14 non-BL UEs in CE mode A (FFS for CE mode B), the single larger maximum UE channel BW for PDSCH and PUSCH in RRC connected mode is (FFS: 5 or 20) MHz.

- FeMTC UEs use Rel-13 DCI formats for MPDCCH Type-0/1/2 CSS transmissions.

- Supported modulation schemes for Rel-14 BL/CE UEs:

  - PDSCH: QPSK, 16QAM

- PUSCH: QPSK, 16QAM

- Max TBS for 5-MHz Rel-14 BL/CE UEs:

  - PDSCH: 4008 bits
  - PUSCH: 4008 bits

- The following FeMTC features:

    1. HARQ-ACK bundling
    2. Larger maximum TBS for 1.4MHz operation
    3. Larger maximum TBS for 5MHz operation
    4. Support of larger bandwidth
    5. 10 HARQ processes for downlink

  are enabled as follows:

  - The UE reports capability to support a given feature
  - FFS: The eNB enables the larger bandwidth and larger TBS by RRC reconfiguration
  - The eNB enables the other features by RRC reconfiguration

- The larger maximum UE channel BW for PDSCH is supported for both CE mode A and CE mode B.

- The larger maximum UE channel BW for PUSCH is not supported for CE mode B.

- For the 5-MHz BL UE,

- The maximum reception bandwidth is 25 PRBs.

- The maximum allocatable PDSCH channel bandwidth is [FFS between 24 or 25] PRBs.

- The maximum transmission bandwidth is 25 PRBs.

- The maximum allocatable PUSCH channel bandwidth is [FFS between 24 or 25] PRBs.

2. DCI format for higher data rate

Many agreements related to the DCI are made; however, the DCI aspects related to the format, configuration, RB assignment and detail design of MCS/TBS table are yet to be decided. In this paper we present our views regarding the above remaining DCI features.

2.1. Configuration of larger maximum TBS size and larger maximum bandwidth

In the previous meeting, it is discussed if larger maximum TBS size and larger maximum bandwidth should be configured by RRC reconfiguration. When UE receive RRC reconfiguration, UE receives only the specific DCI format. Therefore, the number of MPDCCH blind decodings will not increase even if a new DCI format is introduced for FeMTC UE. In [4], in order to differentiate the legacy DCI from the Rel-14 DCI a different scrambling sequence is proposed. However, changing the scrambling sequence would change the search space which depends on the RNTI. To avoid such a change, the larger maximum TBS size and larger maximum bandwidth should be configured by RRC reconfiguration.
Proposal 1: Larger maximum TBS size and larger maximum bandwidth should be configured by RRC reconfiguration.

2.2. MCS/TBS table for larger maximum TBS/bandwidth

RAN1 agreed to support a larger maximum TBS of 4008 bits and 16QAM modulation. RAN1 did not agree to support 64 QAM in order to avoid higher receiver complexity. In order to represent a larger number of ITBS values in the TBS table (shown in Appendix below) we propose to increase the number of bits from 4 to 5 for the MCS field in DCI format 6-0A6-1A/6-0B/6-1B. The bit-size increase of the MCS field allows the eNB to perform scheduling assignments for the larger number of ITBS that are supported for the wider bandwidth.

Proposal 2: The MCS index field in DCI Format 6-0A/6-1A/6-0B/6-1B should be increased by 1 bit to 5 bits for larger maximum TBS.

2.3. Granularity of RB assignments

2.3.1 CE mode A

Several companies have shared their proposals to manage the RB mapping to indicate by DCI. Considering the reuse of the legacy DCI or defining a new DCI, we should decide how the granularity of RB assignments should be represented in the DCI since a larger maximum bandwidth will be supported in Rel-14. Based on the listed contributions we've categorized the granularity proposals into two main categories, namely, NB-based and RB-based.

• NB-based

NB-based resource assignment stands for allocating resource in units of 6PRB assignments such as {6, 12, 18, 24} PRBs. Therefore, flexibility of RB assignment would be limited. On the other hand, the resource assignment in the DCI format 6-0A and 6-1A has a variable field size as the below equation 1, which already depends upon the system bandwidth used.

[Equation 1]

$$\left( \left\lceil \log_2 \left\lfloor \frac{N_{\mathrm{RB}}^{\mathrm{DL}}}{6} \right\rfloor \right\rceil + 5 \text{ bits.} \right)$$

Hence, if RAN1 agrees to support the NB-based resource assignment, then it is reasonable to reuse the Rel-13 DCI format for CE mode A since there are enough bits for NB-based resource assignments.

• RB-based

Unlike NB-based the RB-based resource assignment granularity has the advantage of being more flexible. The RB-based resource assignment allows scheduling by multiplexing with the non-MTC UEs and Rel-13 eMTC UE in the same NB. We've listed the pros and cons of some of the RB assignment methods discussed in various contributions in the table 1 below. Several of the methods require an increase in the size of the fields to provide more flexibility in the resource mapping. This forces us to introduce a new DCI format in Rel-14.

[Table 1]

| RB-based method | Pros | Cons |
|---|---|---|
| NB index + common PRB mapping within NBs | • Multiplexing with non-MTC and Rel-13 eMTC UE within same NB | • More bits<br>• Need more standardization effort for UL |
| NB location + contiguous PRB mapping | • Multiplexing with non-MTC and Rel-13 eMTC UE within same NB<br>• No more bits (only for BL/CE UE) | • Non multiplexing with Rel-14 BL/CE FeMTC UE within same NB |
| NB location + contiguous NB + PRB mapping | • Multiplexing with non-MTC and Rel-13 eMTC UE within same NB | • More bits<br>• Non multiplexing with Rel-14 BL/CE FeMTC UE within same NB |
| Increase the RBG size (Not type 2 for PDSCH) | • Multiplexing with all category of UEs within same NB | • More bits |

(continued)

| RB-based method | Pros | Cons |
|---|---|---|
| New table of combination of NBs and PRB | (Possible)<br>• Multiplexing with non-MTC and Rel-13 eMTC UE within same NB<br>• No more bits | |

Table 1 shows feature of each RB-based method

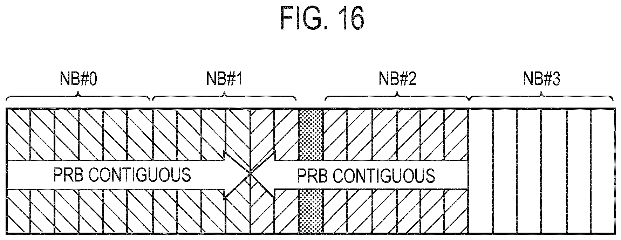

In the "NB location + contiguous PRB mapping" and "NB location + contiguous NB + PRB mapping" methods the eNB cannot multiplex Rel-14 FeMTC UEs in the same NB since the start of RB assignment always allocated in the lowest RB within the NB. It would require an additional bit for reversing the start location of NBs and then the Rel-14 FeMTC UEs would be multiplex within the same NBs as shown in the Fig. 16.

After reviewing various methods and the related pros/cons of each method we prefer Rel-14 should support RB-based resource assignment. The RB-base resource assignment provides better scheduling flexibility in multiplexing MTC and non-MTC Rel-13 UEs

Proposal 3: RB-based resource assignment should be supported for Rel-14 UE in CE mode A.

2.3.2. CE mode B

In the previous meeting as agreed and similar to CE mode A, a larger maximum PDSCH for CE mode B will be supported in Rel-14. Therefore, we support the NB-based resource assignment or NB-based resource assignment + common PRB assignment within NBs for CE mode B as well. In addition, we should define a new DCI format because there are not enough bits to indicate the multiple NBs in legacy DCI format 6-1B.

Proposal 4: New DCI format should be introduced for Rel-14 UE in CE mode B.

Proposal 5: NB-based resource assignment or NB-based resource assignment + common PRB assignment within NBs should be supported for Rel-14 UE in CE mode B.

3. Same subframe scheduling

According to the meeting agreements, cross subframe scheduling by MPDCCH was agreed for wider bandwidth PDSCH/PUSCH. In the Rel-13 eMTC, cross-subframe scheduling is applied because the number of RBs within NBs is quite limited which does not allow same-subframe scheduling. However, if UE can receive more than 6RBs due to support for wider channel bandwidth then there are enough resources to transmit MPDCCH and PDSCH in the same subframe. Furthermore, in Rel-13 "n+2" subframe delay between the MPDCCH and PDSCH was supported to allow the decoding of the scheduling assignment without having to buffer the received signal, thereby enabling lower device complexity. However, this does not need to be the case in Rel-14 because the FeMTC UEs will be much more capable such as higher processing-power. Therefore, the same-subframe scheduling should be supported in Rel-14 since it is more efficient as it decreases the latency, especially in the low repetition cases (CE mode A with Nrep={1, 2,4,...,32}). If the same subframe scheduling is applied for the last subframes of the MPDCCH repetitions then there is no need for buffering of the PDSCH data. There is a possibility some devices will be able to successfully decode the MPDCCH early such that they can start decoding the associated PDSCH early as well. As shown in the Figure 3, the overlapping of K subframes between the MPDCCH and PDSCH repetition subframes should be allowed where the value of K is configurable by the eNB. It is given the total bandwidth including the gap between the MPDCCH and PDSCH in the same subframe has to be less than UE capability such as 5MHz.

Proposal 6: Rel-14 BL UE should be considered to support same subframe scheduling.

(Appendix of the supplementary note)

[Table 2-1]

| $I_{TBS}$ | $N_{PRB}$ | | | | | | | | | |
|---|---|---|---|---|---|---|---|---|---|---|
| | 1 | 2 | 3 | 4 | 5 | 6 | 7 | 8 | 9 | 10 |
| 0 | 16 | 32 | 56 | 88 | 120 | 152 | 176 | 208 | 224 | 256 |
| 1 | 24 | 56 | 88 | 144 | 176 | 208 | 224 | 256 | 328 | 344 |
| 2 | 32 | 72 | 144 | 176 | 208 | 256 | 296 | 328 | 376 | 424 |
| 3 | 40 | 104 | 176 | 208 | 256 | 328 | 392 | 440 | 504 | 568 |
| 4 | 56 | 120 | 208 | 256 | 328 | 408 | 488 | 552 | 632 | 696 |
| 5 | 72 | 144 | 224 | 328 | 424 | 504 | 600 | 680 | 776 | 872 |
| 6 | 328 | 176 | 256 | 392 | 504 | 600 | 712 | 808 | 936 | 1032 |
| 7 | 104 | 224 | 328 | 472 | 584 | 712 | 840 | 968 | 1096 | 1224 |
| 8 | 120 | 256 | 392 | 536 | 680 | 808 | 968 | 1096 | 1256 | 1384 |
| 9 | 136 | 296 | 456 | 616 | 776 | 936 | 1096 | 1256 | 1416 | 1544 |
| 10 | 144 | 328 | 504 | 680 | 872 | 1032 | 1224 | 1384 | 1544 | 1736 |

| 11 | 176 | 376 | 584 | 776 | 1000 | 1192 | 1384 | 1608 | 1800 | 2024 |
|---|---|---|---|---|---|---|---|---|---|---|
| 12 | 208 | 440 | 680 | 904 | 1128 | 1352 | 1608 | 1800 | 2024 | 2280 |
| 13 | 224 | 488 | 744 | 1000 | 1256 | 1544 | 1800 | 2024 | 2280 | 2536 |
| 14 | 256 | 552 | 840 | 1128 | 1416 | 1736 | 1992 | 2280 | 2600 | 2856 |
| 15 | 280 | 600 | 904 | 1224 | 1544 | 1800 | 2152 | 2472 | 2728 | 3112 |
| 16 | 328 | 632 | 968 | 1288 | 1608 | 1928 | 2280 | 2600 | 2984 | 3240 |
| 17 | 336 | 696 | 1064 | 1416 | 1800 | 2152 | 2536 | 2856 | 3240 | 3624 |
| 18 | 376 | 776 | 1160 | 1544 | 1992 | 2344 | 2792 | 3112 | 3624 | 4008 |
| 19 | 408 | 840 | 1288 | 1736 | 2152 | 2600 | 2984 | 3496 | 3880 | 4264 |
| 20 | 440 | 904 | 1384 | 1864 | 2344 | 2792 | 3240 | 3752 | 4136 | 4584 |
| 21 | 488 | 1000 | 1480 | 1992 | 2472 | 2984 | 3496 | 4008 | 4584 | 4968 |
| 22 | 520 | 1064 | 1608 | 2152 | 2664 | 3240 | 3752 | 4264 | 4776 | 5352 |
| 23 | 552 | 1128 | 1736 | 2280 | 2856 | 3496 | 4008 | 4584 | 5160 | 5736 |
| 24 | 584 | 1192 | 1800 | 2408 | 2984 | 3624 | 4264 | 4968 | 5544 | 5992 |
| 25 | 616 | 1256 | 1864 | 2536 | 3112 | 3752 | 4392 | 5160 | 5736 | 6200 |
| 26 | 712 | 1480 | 2216 | 2984 | 3752 | 4392 | 5160 | 5992 | 6712 | 7480 |

[Table 2-2]

| $I_{TBS}$ | $N_{PRB}$ | | | | | | | | | |
|---|---|---|---|---|---|---|---|---|---|---|
| | 11 | 12 | 13 | 14 | 15 | 16 | 17 | 18 | 19 | 20 |
| 0 | 288 | 328 | 344 | 376 | 392 | 424 | 456 | 488 | 504 | 536 |
| 1 | 376 | 424 | 456 | 488 | 520 | 568 | 600 | 632 | 680 | 712 |
| 2 | 472 | 520 | 568 | 616 | 648 | 696 | 744 | 776 | 840 | 872 |
| 3 | 616 | 680 | 744 | 808 | 872 | 904 | 968 | 1032 | 1096 | 1160 |
| 4 | 776 | 840 | 904 | 1000 | 1064 | 1128 | 1192 | 1288 | 1352 | 1416 |
| 5 | 968 | 1032 | 1128 | 1224 | 1320 | 1384 | 1480 | 1544 | 1672 | 1736 |
| 6 | 1128 | 1224 | 1352 | 1480 | 1544 | 1672 | 1736 | 1864 | 1992 | 2088 |
| 7 | 1320 | 1480 | 1608 | 1672 | 1800 | 1928 | 2088 | 2216 | 2344 | 2472 |
| 8 | 1544 | 1672 | 1800 | 1928 | 2088 | 2216 | 2344 | 2536 | 2664 | 2792 |
| 9 | 1736 | 1864 | 2024 | 2216 | 2344 | 2536 | 2664 | 2856 | 2984 | 3112 |
| 10 | 1928 | 2088 | 2280 | 2472 | 2664 | 2792 | 2984 | 3112 | 3368 | 3496 |
| 11 | 2216 | 2408 | 2600 | 2792 | 2984 | 3240 | 3496 | 3624 | 3880 | 4008 |
| 12 | 2472 | 2728 | 2984 | 3240 | 3368 | 3624 | 3880 | 4136 | 4392 | 4584 |

| 13 | 2856 | 3112 | 3368 | 3624 | 3880 | 4136 | 4392 | 4584 | 4968 | 5160 |
|---|---|---|---|---|---|---|---|---|---|---|
| 14 | 3112 | 3496 | 3752 | 4008 | 4264 | 4584 | 4968 | 5160 | 5544 | 5736 |
| 15 | 3368 | 3624 | 4008 | 4264 | 4584 | 4968 | 5160 | 5544 | 5736 | 6200 |
| 16 | 3624 | 3880 | 4264 | 4584 | 4968 | 5160 | 5544 | 5992 | 6200 | 6456 |
| 17 | 4008 | 4392 | 4776 | 5160 | 5352 | 5736 | 6200 | 6456 | 6712 | 7224 |
| 18 | 4392 | 4776 | 5160 | 5544 | 5992 | 6200 | 6712 | 7224 | 7480 | 7992 |
| 19 | 4776 | 5160 | 5544 | 5992 | 6456 | 6968 | 7224 | 7736 | 8248 | 8504 |
| 20 | 5160 | 5544 | 5992 | 6456 | 6968 | 7480 | 7992 | 8248 | 8760 | 9144 |
| 21 | 5544 | 5992 | 6456 | 6968 | 7480 | 7992 | 8504 | 9144 | 9528 | 9912 |
| 22 | 5992 | 6456 | 6968 | 7480 | 7992 | 8504 | 9144 | 9528 | 10296 | 10680 |
| 23 | 6200 | 6968 | 7480 | 7992 | 8504 | 9144 | 9912 | 10296 | 11064 | 11448 |
| 24 | 6712 | 7224 | 7992 | 8504 | 9144 | 9912 | 10296 | 11064 | 11448 | 12216 |
| 25 | 6968 | 7480 | 8248 | 8760 | 9528 | 10296 | 10680 | 11448 | 12216 | 12576 |
| 26 | 8248 | 8760 | 9528 | 10296 | 11064 | 11832 | 12576 | 13536 | 14112 | 14688 |

[Table 2-3]

| $I_{TBS}$ | $N_{PRB}$ | | | | | | | | | |
|---|---|---|---|---|---|---|---|---|---|---|
| | 21 | 22 | 23 | 24 | 25 | 26 | 27 | 28 | 29 | 30 |
| 0 | 568 | 600 | 616 | 648 | 680 | 712 | 744 | 776 | 776 | 808 |
| 1 | 744 | 776 | 808 | 872 | 904 | 936 | 968 | 1000 | 1032 | 1064 |
| 2 | 936 | 968 | 1000 | 1064 | 1096 | 1160 | 1192 | 1256 | 1288 | 1320 |
| 3 | 1224 | 1256 | 1320 | 1384 | 1416 | 1480 | 1544 | 1608 | 1672 | 1736 |
| 4 | 1480 | 1544 | 1608 | 1736 | 1800 | 1864 | 1928 | 1992 | 2088 | 2152 |
| 5 | 1864 | 1928 | 2024 | 2088 | 2216 | 2280 | 2344 | 2472 | 2536 | 2664 |
| 6 | 2216 | 2280 | 2408 | 2472 | 2600 | 2728 | 2792 | 2984 | 2984 | 3112 |
| 7 | 2536 | 2664 | 2792 | 2984 | 3112 | 3240 | 3368 | 3368 | 3496 | 3624 |
| 8 | 2984 | 3112 | 3240 | 3368 | 3496 | 3624 | 3752 | 3880 | 4008 | 4264 |
| 9 | 3368 | 3496 | 3624 | 3752 | 4008 | 4136 | 4264 | 4392 | 4584 | 4776 |
| 10 | 3752 | 3880 | 4008 | 4264 | 4392 | 4584 | 4776 | 4968 | 5160 | 5352 |
| 11 | 4264 | 4392 | 4584 | 4776 | 4968 | 5352 | 5544 | 5736 | 5992 | 5992 |
| 12 | 4776 | 4968 | 5352 | 5544 | 5736 | 5992 | 6200 | 6456 | 6712 | 6712 |
| 13 | 5352 | 5736 | 5992 | 6200 | 6456 | 6712 | 6968 | 7224 | 7480 | 7736 |
| 14 | 5992 | 6200 | 6456 | 6968 | 7224 | 7480 | 7736 | 7992 | 8248 | 8504 |
| 15 | 6456 | 6712 | 6968 | 7224 | 7736 | 7992 | 8248 | 8504 | 8760 | 9144 |
| 16 | 6712 | 7224 | 7480 | 7736 | 7992 | 8504 | 8760 | 9144 | 9528 | 9912 |
| 17 | 7480 | 7992 | 8248 | 8760 | 9144 | 9528 | 9912 | 10296 | 10296 | 10680 |
| 18 | 8248 | 8760 | 9144 | 9528 | 9912 | 10296 | 10680 | 11064 | 11448 | 11832 |
| 19 | 9144 | 9528 | 9912 | 10296 | 10680 | 11064 | 11448 | 12216 | 12576 | 12960 |
| 20 | 9912 | 10296 | 10680 | 11064 | 11448 | 12216 | 12576 | 12960 | 13536 | 14112 |
| 21 | 10680 | 11064 | 11448 | 12216 | 12576 | 12960 | 13536 | 14112 | 14688 | 15264 |
| 22 | 11448 | 11832 | 12576 | 12960 | 13536 | 14112 | 14688 | 15264 | 15840 | 16416 |
| 23 | 12216 | 12576 | 12960 | 13536 | 14112 | 14688 | 15264 | 15840 | 16416 | 16992 |
| 24 | 12960 | 13536 | 14112 | 14688 | 15264 | 15840 | 16416 | 16992 | 17568 | 18336 |
| 25 | 13536 | 14112 | 14688 | 15264 | 15840 | 16416 | 16992 | 17568 | 18336 | 19080 |
| 26 | 15264 | 16416 | 16992 | 17568 | 18336 | 19080 | 19848 | 20616 | 21384 | 22152 |

Table 2 (Tables 2-1 to 2-3) is a transport block size table. The colored parts in the table are candidates for 5 MHz TBS.

The entire contents of US Provisional Application No. 62/417492 (filed on November 4, 2016) are incorporated herein by reference.

[Industrial applicability]

The present invention is useful in the mobile communication field.

**Claims**

1. A mobile communication method for performing communication between a base station and a user terminal by using a narrow band having a predetermined bandwidth, comprising:

   a step of performing, by the user terminal, first communication related to control information by using a first narrow band in an n-th subframe; and
   a step of performing, by the user terminal, second communication related to user data by using a second narrow band different from the first narrow band in an (n+1)-th subframe, wherein
   a symbol time region at an end of the n-th subframe and/or a symbol time region at a head of the (n+1)-th subframe are non-used regions provided for the user terminal to switch from the first narrow band to the second narrow band.

2. The mobile communication method according to claim 1, wherein in the step of performing the first communication, the user terminal transmits the control information by using a used region other than the non-used region in the n-th subframe, and
   in the step of performing the second communication, the user terminal transmits the user data by using a used region other than the non-used region in the (n+1)-th subframe.

3. The mobile communication method according to claim 1, comprising a step of transmitting region information for specifying the non-used region from the base station to the user terminal.

4. The mobile communication method according to claim 3, wherein the region information is information indicating a symbol number corresponding to the non-used region.

5. The mobile communication method according to claim 3, wherein the region information includes information indicating whether or not the non-used region is set.

6. A user terminal communicating with a base station by using a narrow band having a predetermined bandwidth, comprising:

   a controller, wherein
   the controller performs first communication related to control information by using a first narrow band in an n-th subframe,
   the controller performs second communication related to user data by using a second narrow band different from the first narrow band in an (n+1)-th subframe, and
   a symbol time region at an end of the n-th subframe and/or a symbol time region at a head of the (n+1)-th subframe are non-used regions provided for the user terminal to switch from the first narrow band to the second narrow band.

7. A device for controlling a user terminal communicating with a base station by using a narrow band having a predetermined bandwidth, comprising:

   a processor, wherein
   the processor executes:

   a process of performing first communication related to control information by using a first narrow band in an n-th subframe, and
   a process of performing second communication related to user data by using a second narrow band different from the first narrow band in an (n+1)-th subframe, and
   a symbol time region at an end of the n-th subframe and/or a symbol time region at a head of the (n+1)-th subframe are non-used regions provided for the user terminal to switch from the first narrow band to the second narrow band.

# FIG. 1

FIG. 2

100

UE

120
USER
INTERFACE

160
PROCESSOR

110
RADIO
TRANSCEIVER

101

130
GNSS
RECEIVER

140
BATTERY

150
MEMORY

FIG. 3

200

eNB

220
NETWORK
INTERFACE

240
PROCESSOR

210
RADIO
TRANSCEIVER

201

230
MEMORY

# FIG. 4

```
┌─ UE ─────────────┐        ┌─ eNB ────────────┐        ┌─ MME ────────────┐
│  ┌──────────┐    │        │                  │        │    ┌──────────┐  │
│  │   NAS    │◄───┼────────┼──────────────────┼────────┼───►│   NAS    │  │
│  └──────────┘    │        │                  │        │    └──────────┘  │
│  ┌──────────┐    │  RADIO BEARER  ┌──────────┐│        │                  │
│  │   RRC    │◄───┼────────────────►│   RRC   ││        │                  │
│  └──────────┘    │        │        └─────────┘│        │                  │
│  ┌──────────┐    │        │        ┌─────────┐│        │                  │
│  │   PDCP   │◄───┼────────────────►│  PDCP   ││        │                  │
│  └──────────┘    │        │        └─────────┘│        │                  │
│  ┌──────────┐    │ LOGICAL CHANNEL┌──────────┐│        │                  │
│  │   RLC    │◄───┼────────────────►│   RLC   ││        │                  │
│  └──────────┘    │        │        └─────────┘│        │                  │
│  ┌──────────┐    │TRANSPORT CHANNEL┌─────────┐│        │                  │
│  │   MAC    │◄───┼────────────────►│   MAC   ││        │                  │
│  └──────────┘    │        │        └─────────┘│        │                  │
│  ┌──────────┐    │ PHYSICAL CHANNEL┌─────────┐│        │                  │
│  │   PHY    │◄───┼────────────────►│   PHY   ││        │                  │
│  └──────────┘    │        │        └─────────┘│        │                  │
└──────────────────┘        └──────────────────┘        └──────────────────┘
```

# FIG. 5

```
│◄──────────────── 1 RADIO FRAME ────────────────►│
│◄1 SLOT►│
┌────────┬────────┬────────┬────────┐      ┌────────┬────────┐
│  #0    │  #1    │  #2    │  #3    │ ···· │  #18   │  #19   │
└────────┴────────┴────────┴────────┘      └────────┴────────┘
│◄─ 1 SUBFRAME ──►│
```

TIME

## FIG. 6

SYSTEM BAND

FIRST BAND (FIRST BANDWIDTH)

1RB

NARROW BAND
(SECOND BANDWIDTH)

# FIG. 7

PDCCH M-PDCCH

FIRST BAND
(FIRST
BANDWIDTH)

SCHEDULING

1 SUBFRAME

PDSCH

## FIG. 8

PDCCH         M-PDCCH         PDSCH

NB#1

NB#2

FIRST BAND
(FIRST
BANDWIDTH)

NB#3

NB#4

SUBFRAME #n       SUBFRAME #n+1

SWITCHING PERIOD

DECODING REGION        PDCCH REGION

NON-DECODING REGION

# FIG. 9

UE100                                                          eNB200

S11
SYSTEM INFORMATION

S12
RRC CONNECTION PROCEDURE

S13
REGION INFORMATION

S14
M-PDCCH

PDSCH
PDSCH                                                           } S15
PDSCH

# FIG. 10

PDCCH

M-PDCCH

PDSCH

NB#1

NB#2

NB#3

NB#4

FIRST BAND
(FIRST
BANDWIDTH)

SUBFRAME #n

SUBFRAME #n+1

SWITCHING PERIOD

DECODING REGION

NON-DECODING REGION

PDCCH REGION

# FIG. 11

UE100                                                                    eNB200

S21

SYSTEM INFORMATION

S22

RRC CONNECTION PROCEDURE

S23

M-PDCCH

PDSCH

PDSCH          } S24

PDSCH

# FIG. 12

PDCCH    M-PDCCH    PDSCH

NB#1

NB#2

FIRST BAND
(FIRST
BANDWIDTH)

NB#3

NB#4

SUBFRAME #n    SUBFRAME #n+1

SWITCHING PERIOD

DECODING REGION

PDCCH REGION    NON-DECODING REGION

# FIG. 13

# FIG. 14

FIRST BAND
(FIRST
BANDWIDTH)

PDCCH

M-PDCCH

PDSCH

NB#1

NB#2

NB#3

NB#4

SUBFRAME #n

SUBFRAME #n+1

SWITCHING PERIOD

PDCCH REGION

SHIFT TIME

TRANSMISSION
START POSITION

DECODING REGION

NB#0　　NB#1　　NB#2　　NB#3

FIG. 15A ONLY NB INDEX

NB#0　　NB#1　　NB#2　　NB#3

PRB CONTIGUOUS

FIG. 15C NB LOCATION+PRB CONTIGUOUS

NB#0　　NB#1　　NB#2　　NB#3

FIG. 15B NB INDEX+COMMON PRB WITHIN

NB#0　　NB#1　　NB#2　　NB#3

PRB CONTIGUOUS

OU MAPPING

FIG. 15D NB LOCATION+NB CONTIGUOUS PRB MAPPING

FIG. 16

# FIG. 17

K SUBFRAMES

PDCCH | MPDCCH · · · PDCCH | MPDCCH · · · PDCCH | MPDCCH | PDCCH · · · PDCCH
PDSCH | PDSCH | PDSCH | PDSCH

MPDCCH REPETITION(N TIMES)

PDSCH REPETITION(M TIMES)

## INTERNATIONAL SEARCH REPORT

| International application No. |
| --- |
| PCT/JP2017/039614 |

**A. CLASSIFICATION OF SUBJECT MATTER**
Int.Cl. H04L27/26(2006.01)i

According to International Patent Classification (IPC) or to both national classification and IPC

**B. FIELDS SEARCHED**

Minimum documentation searched (classification system followed by classification symbols)
Int.Cl. H04L27/26

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-034376 A (FUJITSU LIMITED) 16 February 2012 (Family: none) | 1-7 |
| A | HUAWEI, HISILICON, Discussion and simulation results for M-PDSCH [online], 3GPP TSG-RAN WG4#78bis R4-161989, 11 April 2016, pp. 1-9 | 1-7 |
| A | QUALCOMM INCORPORATED, Discussion of issues with rate matching for UL narrow band change [online], 3GPP TSG-RAN WG1#84b R1-163003, 15 April 2016 | 1-7 |

☒ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 December 2017 | 09 January 2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2017/039614

C (Continuation). DOCUMENTS CONSIDERED TO BE RELEVANT

| Category* | Citation of document, with indication, where appropriate, of the relevant passages | Relevant to claim No. |
|---|---|---|
| P, X | JP 2017-092642 A (PANASONIC INTELLECTUAL PROPERTY CORPORATION OF AMERICA) 25 May 2017, paragraphs [0145]-[0165]<br>& WO 2017/077694 A1 | 1, 2, 6, 7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62417492 B

**Non-patent literature cited in the description**

- *3GPP technical report,* June 2013